# EUROPÄISCHE PATENTANMELDUNG

(11) **EP 0 802 617 A2**
(43) Veröffentlichungstag der Anmeldung: **22.10.1997**
(21) Anmeldenummer: 97810185.5
(22) Anmeldetag: 27.03.1997
(51) Int. Cl.: H02M 5/45, H02M 7/48

(54) **Leistungselektronische Schaltungsanordnung**

(30) Priorität: 20.04.1996 DE 19615855
(71) Anmelder: Asea Brown Boveri AG, 5401 Baden (CH)
(72) Erfinder: Grüning, Horst, Dr., 5430 Wettingen (CH)
(74) Vertreter: Weibel, Beat

(57) **Zusammenfassung**

Es wird eine leistungselektronische Schaltungsanordnung angegeben, die einen ersten Stromrichter umfasst. Ein zweiter Stromrichter ist zwischen die Lastanschlüsse des ersten Stromrichters und eine Last geschaltet. Die negativen oder positiven Werte der Gleichspannungszwischenkreise des ersten und zweiten Stromrichters können durch entsprechende Ansteuerung der Stromrichter addiert werden. Dadurch erreicht man eine feinere Spannungsstufung und somit eine verbesserte Annäherung der resultierenden Ausgangsspannung an die Sinusform.

## Beschreibung

### Technisches Gebiet

Die Erfindung bezieht sich auf das Gebiet der Leistungselektronik. Sie geht aus von einer leistungselektronischen Schaltungsanordnung nach dem Oberbegriff des ersten Anspruchs.

### Stand der Technik

Ein solche Schaltungsanordnung wird beispielsweise schon im Artikel "Moderne Leistungshalbleiter in der Stromrichtertechnik", etz Bd. 114 (1993) Heft 21, von W. Bölsterling, H. Ludwig, G. Schulze und M. Tscharn beschrieben.

Insbesondere in der Antriebstechnik ist es Ziel dieser leistungselektronischen Schaltungsanordnungen, möglichst sinusförmige Spannungsverläufe veränderlicher Frequenz zu erzeugen. Dazu bietet sich z.B. das Prinzip des Umrichters an, der aus einem AC-Netz eine Gleichspannung formt und mit Hilfe eines Wechselrichters aus dieser Gleichspannung wieder eine Wechselspannung erzeugt, z.B. mit veränderbarer Frequenz. Die Wechselspannung wird üblicherweise durch eine Pulsdauermodulation der Gleichspannung erzeugt. Es existieren Zweipunktwechselrichterkonzepte, bei denen die Wechselspannung nur zwei Zustände, nämlich entweder eine positive oder eine negative Spannung, annehmen kann und auch Dreipunktwechselrichterkonzepte, bei denen die Wechselspannung drei Zustände, nämlich eine positive Spannung, eine negative sowie OV, annehmen kann. Die Wechselspannung kann mit einem Dreipunktwechselrichter auch durch eine stufenförmige Annäherung des sinusförmigen Verlaufs mit den drei Spannungsstufen erzeugt werden. Diese Lösung ergibt jedoch nur eine sehr ungenaue und damit Oberwellen behaftete Annäherung der Ausgangsspannung an die Sinusform, die insbesondere im Hinblick auf die gesteigerten Netzhygieneanforderungen problematisch ist.

### Darstellung der Erfindung

Aufgabe der vorliegenden Erfindung ist es, eine leistungselektronische Schaltungsanordnung anzugeben, mit welcher eine verbesserte Sinusapproximation erreicht werden kann.

Diese Aufgabe wird bei einer leistungselektronischen Schaltungsanordnung der eingangs genannten Art durch die Merkmale des ersten Anspruchs gelöst.

Kern der Erfindung ist es also, dass ein zweiter Stromrichter vorgesehen ist, der an den oder jeden Lastanschluss eines ersten Stromrichters angeschlossen und einer Last derart vorgeschaltet ist, dass wahlweise zumindest die positive Zwischenkreisspannung +Uzk2 oder die negative Zwischenkreisspannung -Uzk2 oder gegebenenfalls 0V zu einem vom ersten Stromrichter an dessen Lastanschluss geschalteten Spannungswert addiert werden kann.

Mit einer erfindungsgemässen Schaltungsanordnung kann also eine wesentlich feinere Stufung erreicht werden als beim Stand der Technik, so dass die Sinusform besser approximiert wird.

Die ersten Stromrichter können die Form eines Zweipunktwechselrichters oder eines Dreipunktwechselrichters aufweisen. Vorzugsweise ist der ersten Stromrichter auch mehrphasig aufgebaut und pro Phase ist ein zweiter Stromrichter an den Lastanschluss angeschlossen und der Last vorgeschaltet. Der zweite Stromrichter weist vorzugsweise die Struktur einer Brückenschaltung mit zwei Brückenzweigen auf. Der erste Brückenzweig ist mit dem Lastanschluss des ersten Stromrichters verbunden und nach der Art eines Zweipunktwechselrichters aufgebaut. Der zweite Brückenzweig ist über einen Gleichspannungszwischenkreis mit dem ersten verbunden und ist nach Art eines Zweipunkt- oder Dreipunktwechselrichters aufgebaut. Der Lastanschluss des zweiten Brückenzweiges ist dann mit der Last verbunden. Ausserdem kann zwischen der Last und dem Lastanschluss des zweiten Brückenzweigs ein Filter vorgesehen sein.

Weitere Ausführungsbeispiele ergeben sich aus den entsprechenden abhängigen Ansprüchen.

Der Vorteil des erfindungsgemässen Aufbaus besteht darin, dass mehr Spannungsstufen zur Verfügung stehen als beim Stand der Technik, wodurch eine verbesserte Approximation der Sinusform mit all ihren Vorteilen erreicht wird.

### Kurze Beschreibung der Zeichnungen

Nachfolgend wird die Erfindung anhand von Ausführungsbeispielen im Zusammenhang mit den Zeichnungen näher erläutert.

Es zeigen:
- **Fig. 1**: Ein Schaltschema einer erfindungsgemässen Schaltungsanordnung;
- **Fig. 2**: Eine Variante für den zweiten Stromrichter;
- **Fig. 3**: Den zeitlichen Ablauf einer möglichen Ausgangsspannnung einer Schaltung nach Figur 1;
- **Fig. 4**: Den zeitlichen Ablauf einer möglichen Ausgangsspannung einer Schaltung mit zweiten Stromrichtern nach Figur 2;
- **Fig. 5**: Einen Ausschnitt einer Ausgangsspannung mit weiter verbesserter Sinus-Approximation.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

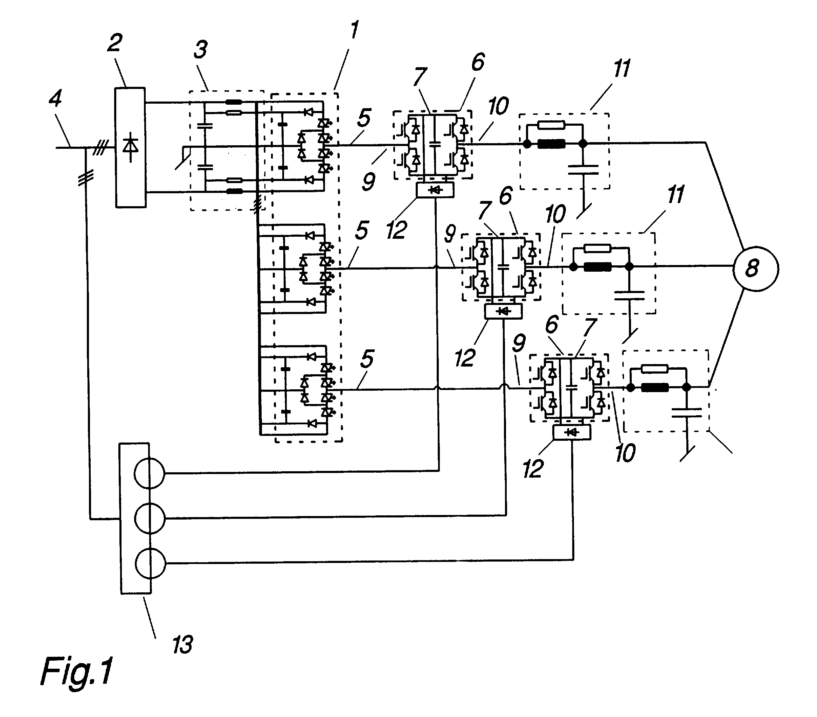

Figur 1 zeigt ein Schaltschema einer erfindungsgemässen Schaltungsanordnung. Mit 1 ist ein erster Stromrichter bezeichnet, der über einen ersten Gleichrichter 2 und einen ersten Gleichspannungszwischenkreis 3 an ein Energieversorgungsnetz 4 angeschlossen ist. Der erste Gleichspannungszwischenkreis 3 weist eine Spannung Uzk1 auf. Der Stromrichter 1 ist in diesem Ausführungsbeispiel als dreiphasiger Dreipunktwechselrichter ausgebildet. Die Phasen sind an den ersten Gleichspannungszwischenkreis 3 angeschlossen, der von dem Energieversorgungsnetz 4 über den ersten Gleichrichter 2 gespeist wird.

An die Lastanschlüsse 5 des ersten Stromrichters 1 sind zweite Stromrichter 6 angeschlossen. Im Ausführungsbeispiel nach Figur 1 umfassen die zweiten Stromrichter 6 zwei Brückenzweige mit einem ersten und zweiten Brückenanschluss 9 und 10. Der erste Brückenanschluss 9 steht mit dem jeweiligen Lastanschluss 5 des ersten Stromrichters 1 in Verbindung, während der zweite Brückenanschluss 10 über ein allenfalls dazwischen geschaltetes Filter 11 mit den Anschlüssen einer Last 8, z.B. eines dreiphasigen Drehstrommotors verbunden ist. Zwischen den Brückenzweigen der zweiten Stromrichter 6 ist ein zweiter Gleichspannungszwischenkreis 7 mit einer Spannung Uzk2 vorgesehen. Dieser zweite Gleichspannungszwischenkreis wird durch einen von einem zweiten Gleichrichter 12 gespeisten Kondensator gebildet.

Die Schaltungsanordnung nach Figur 1 funktioniert wie folgt:
Durch entsprechende, als bekannt vorausgesetzte Ansteuerung der Halbleiterschalter des ersten Stromrichters 1 kann an die Lastanschlüsse 5 entweder die positive Zwischenkreisspannung +Uzk1, die negative -Uzk1 oder 0 Volt geschaltet werden. Zu dieser Spannung kann nun mittels entsprechender, ebenfalls als bekannt vorausgesetzter Ansteuerung der Halbleiterschalter des zweiten Stromrichters 6 die positive zweite Zwischenkreisspannung +Uzk2, 0 Volt oder die negative -Uzk2 addiert werden.

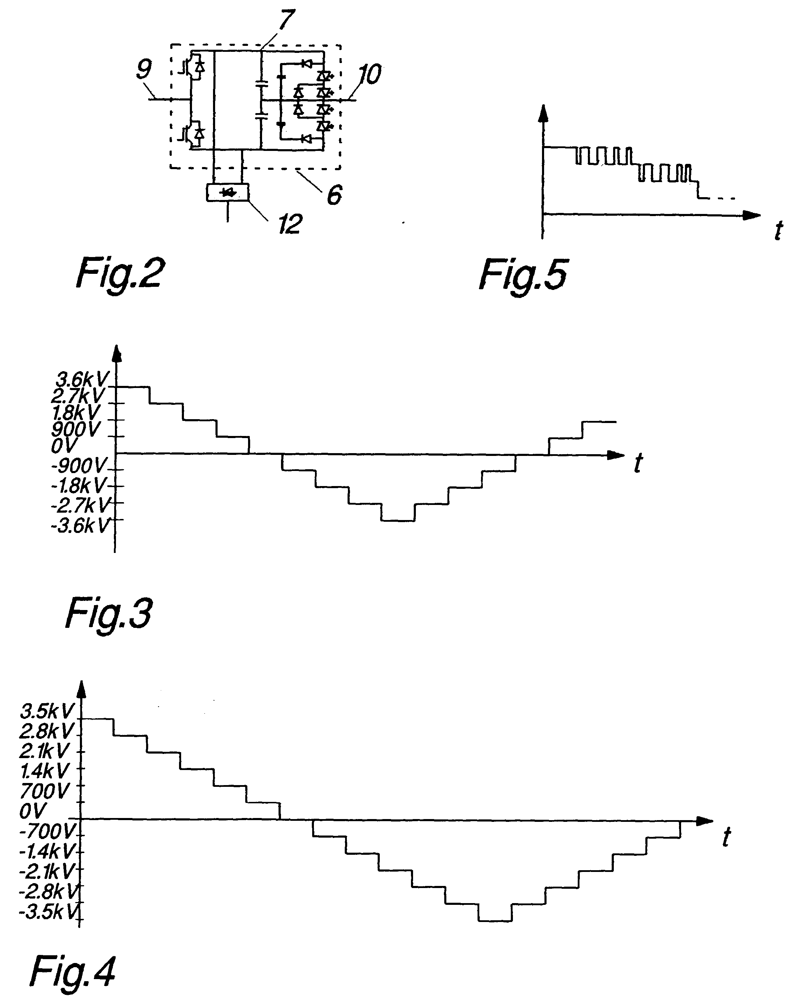

Im beispielhaften Falle der Auslegung des ersten Zwischenkreises 3 auf 2.7kV und des zweiten Zwischenkreises 7 auf 900V kann somit durch entsprechende Ansteuerung der ersten und zweiten Stromrichter eine annähernd sinusförmige Spannungskurve, wie sie in Figur 3 dargestellt wird, erzeugt werden. Zu diesem Zweck werden die Stromrichter 1 und 6 wie folgt angesteuert:

| 1. Stromrichter | 2. Stromrichter | resultierende Spannung |
|---|---|---|
| 2.7 kV | 900 V | 3.6 kV |
| 2.7 kV | 0 V | 2.7 kV |
| 2.7 kV | -900 V | 1.8 kV |
| 0V | 900 V | 900 V |
| 0 V | 0 V | 0 V |
| 0 V | -900 V | -900 V |
| -2.7 kV | 900 V | -1.8 kV |
| -2.7 kV | 0 V | -2.7 kV |
| -2.7 kV | -900 V | -3.6 kV |

Der zweite Stromrichter 2 wird also mit einer höheren Frequenz getaktet als der erste.

Der zweite Brückenzweig 10 des zweiten Stromrichters 6 kann auch nach der Art eines Dreipunktwechselrichterzweiges aufgebaut sein (Figur 2). Eine besonders bevorzugte Ausführungsform wird in dieser Figur dargestellt, die keinen Energiefluss von der Last 8 in Richtung des Energieversorgungsnetzes 4 erlaubt, dafür einfach aufgebaut ist. Dieses Ausführungsbeispiel erlaubt eine noch feinere Stufung als dasjenige nach Figur 1, da jetzt auch nur die Hälfte der positiven oder negativen zweiten Zwischenkreisspannung Uzk2 zur ersten Uzk1 addiert werden kann. Die zweite Zwischenkreisspannung Uzk2 kann dazu beispielsweise 2x 700 V = 1400 V betragen und die ersten 2.1 kV. In diesem Fall werden die Stromrichter beispielsweise wie folgt angesteuert (vergl. Figur 4):

| 1. Stromrichter | 2. Stromrichter | resultierende Spannung |
|---|---|---|
| 2.1 kV | 1.4 kV | 3.5 kV |
| 2.1 kV | 700 V | 2.8 kV |
| 2.1 kV | 0 V | 2.1 kV |
| 2.1 kV oder 0 V | -700 V* 1.4 kV | 1.4 kV |
| 0 V | 700 V | 700 V |
| 0 V | 0 V | 0 V |
| 0 V | -700 V | -700 V |
| 0 V oder -2.1 kV | -1.4 kV 700 V* | -1.4 kV |
| -2.1 kV | 0 V | -2.1 kV |
| -2.1 kV | -700 V | - 2.8 kV |
| -2.1 kV | -1.4 kV | -3.5 kV |

Zur Vermeidung einer Rückspeisung von Energie aus dem Stromrichter 1 in den Stromrichter 6, bzw. dessen Zwischenkreis 7, werden die mit * gekennzeichneten Möglichkeiten nicht gewählt. Andernfalls würde die Spannung am Kondensator des zweiten Zwischenkreises 7 mit der Zeit unzulässige hohe Werte annehmen.

Eine noch verbesserte Annäherung der Sinusform erreicht man dadurch, dass die Schalter des zweiten Stromrichters 6 zwischengetaktet werden (Figur 5). Auch eine Zwischen-Taktung des ersten und/oder zweiten Stromrichters ist denkbar.

Der zweite Zwischenkreis 7 kann von nur einer Wechselstromphase mit Brükkengleichrichter oder von drei Wechselstromphasen mit Drehstrom-Gleichrichter-Brücke gespeist werden. Die erste Variante weist den Vorteil auf, dass Wicklungen des Transformators 13 eingespart werden können.

Als weitere Variante der erfindungsgemässen Schaltungsanordnung kann anstelle des Gleichrichters 12 eine Umrichterbrücke verwendet werden. Dadurch ist der zweite Stromrichter 6 rückspeisefähig und 4-Quadranten-Betrieb wird möglich. Wird zudem der Gleichrichter 2 entsprechend ausgelegt, erhält man eine Schaltungsanordnung, die einen vollständig rückspeisefähigen Umrichter darstellt. Dadurch können einerseits auch die in oben stehender Tabelle mit * gekennzeichneten Zustände gewählt werden. Andererseits besteht aber auch die Möglichkeit, die Umrichterbrücken 12 so anzusteuern, dass sie über den Transformator 13 Blindstrom und/oder Oberwellenströme aus dem Netz 4 aufnehmen. Dadurch ist eine weitgehende Kompensation der durch den Gleichrichter 2 erzeugten Oberwellen möglich. Dies hat den Vorteil, dass als Gleichrichter 2 ein kostengünstiger z.B. mit Dioden in 6-Puls-Schaltung ausgerüsteter Gleichrichter verwendet werden kann.

Insgesamt steht also mit der Erfindung eine leistungselektronische Schaltungsanordnung zur Verfügung, mit der eine verbesserte Annäherung der Sinusform erzielt werden kann.

### Bezugszeichenliste

- 1: erster Stromrichter
- 2: erster Gleichrichter
- 3: erster Gleichspannungszwischenkreis
- 4: Energieversorgungsnetz
- 5: Lastanschlüsse des ersten Stromrichters
- 6: zweiter Stromrichter
- 7: zweiter Gleichspannungszwischenkreis
- 8: Last
- 9: erster Brückenanschluss
- 10: zweiter Brückenanschluss
- 11: Filter
- 12: zweiter Gleichrichter
- 13: Transformator

## Patentansprüche

1. Leistungselektronische Schaltungsanordnung umfassend:
- einen ersten Stromrichter (1), der über einen ersten Gleichspannungszwischenkreis (3), mit einer ersten Zwischenkreisspannung Uzk1, und einen ersten Gleichrichter (2) an ein Energieversorgungsnetz (4) angeschlossen ist und der mindestens einen Lastanschluss (5) aufweist, wobei wahlweise die positive erste Zwischenkreisspannung +Uzk1 oder die negative - Uzk1 oder gegebenenfalls 0V an den oder jeden Lastanschluss (5) geschaltet werden kann;
dadurch gekennzeichnet, dass
- mindestens ein zweiter Stromrichter (6) vorgesehen ist, der einen zweiten Gleichspannungszwischenkreis (7) mit einer zweiten Zwischenkreisspannung Uzk2 aufweist und der an den oder jeden Lastanschluss (5) des ersten Stromrichters (1) angeschlossen und einer Last (8) derart vorgeschaltet ist, dass wahlweise zumindest die positive zweite Zwischenkreisspannung +Uzk2 oder die negative zweite Zwischenkreisspannung -Uzk2 oder allenfalls 0V zu einem vom ersten Stromrichter (1) an dessen Lastanschluss (5) geschalteten Spannungswert addiert werden kann.

2. Schaltungsanordnung nach Anspruch 1, dadurch gekennzeichnet, dass der erste Stromrichter (1) einen dreiphasigen Zweipunkt-Wechselrichter und drei Lastanschlüsse (5) umfasst.

3. Schaltungsanordnung nach Anspruch 1, dadurch gekennzeichnet, dass der erste Stromrichter (1) einen dreiphasigen Dreipunktwechselrichter und drei Lastanschlüsse (5) umfasst.

4. Schaltungsanordnung nach einem der Ansprüche 2 oder 3, dadurch gekennzeichnet, dass der oder jeder zweite Stromrichter (6) eine von einem zweiten Gleichrichter (12) gespeiste Brückenschaltung mit einem ersten und einem zweiten Brückenzweig und entsprechend einem ersten und einem zweiten Brückenanschluss (9 und 10) umfasst, wobei der erste Brückenanschluss (9) mit einem Lastanschluss (5) des ersten Stromrichters und der zweite Brückenanschluss (10) mit der Last (8) verbunden ist.

5. Schaltungsanordnung nach Anspruch 4, dadurch gekennzeichnet, dass der erste Brückenzweig und der zweite Brückenzweig nach der Art eines Zweipunktwechselrichters aufgebaut sind.

6. Schaltungsanordnung nach Anspruch 4, dadurch gekennzeichnet, dass der erste Brückenzweig nach der Art eines Zweipunktwechselrichters und der zweite Brückenzweig nach der Art eines Dreipunktwechselrichters aufgebaut ist.

7. Schaltungsanordnung nach Anspruch 3 und 4, 5 oder 6, dadurch gekennzeichnet, dass der zweite Brückenanschluss (10) über ein Filter (11) mit einem potentialmässigen Mittelpunkt des Dreipunktwechselrichters des ersten Stromrichters (1) verbunden ist.

8. Schaltungsanordnung nach einem der vorstehenden Ansprüche, dadurch gekennzeichnet, dass der zweite Gleichrichter (12) über einen Transformator (13) mit dem Energieversorgungsnetz (4) verbunden ist.

9. Schaltungsanordnung nach einem der Ansprüche 1 bis 8, dadurch gekennzeichnet, dass der zweite Stromrichter (6) pulsdauermoduliert betrieben wird.

10. Schaltungsanordnung nach einem der Ansprüche 4 bis 9, dadurch gekennzeichnet, dass der erste Gleichrichter (2) und der zweite Gleichrichter (12) nach der Art einer Umrichterbrücke aufgebaut sind und dass der zweite Gleichrichter (12) so angesteuert wird, dass Oberwellen im Netz (4) kompensiert werden.
